(19) Europäisches Patentamt
European Patent Office
Office européen des brevets

(11) **EP 2 166 216 A1**

(12) **DEMANDE DE BREVET EUROPEEN**

(43) Date de publication:
**24.03.2010 Bulletin 2010/12**

(51) Int Cl.:
*F02D 41/30* *(2006.01)*     *F02D 41/40* *(2006.01)*

(21) Numéro de dépôt: **09290660.1**

(22) Date de dépôt: **31.08.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **18.09.2008  FR 0805135**

(71) Demandeur: **IFP**
**92852 Rueil-Malmaison Cédex (FR)**

(72) Inventeurs:
• **Pagot, Alexandre**
**92500 Rueil Malmaison (FR)**
• **Zaccardi, Jean-Marc**
**74600 Seynod (FR)**

(54) **Procédé de contrôle de la combustion d'un mélange carburé pour un moteur à combustion interne à allumage commandé**

(57)     La présente invention concerne un procédé de contrôle de la combustion d'un moteur à combustion interne à allumage commandé, en particulier moteur suralimenté, dans lequel le moteur comprend au moins un cylindre (12) avec une chambre de combustion (14), des moyens d'admission (16), des moyens d'échappement (22), et des moyens d'alimentation en carburant (44) permettant de réaliser un mélange carburé dans ladite chambre de combustion.

Selon l'invention, le procédé consiste :

- à établir, entre un régime-moteur faible (Rf) et un régime-moteur bas (Rb) du moteur, une courbe (C2) des valeurs limites (P2) de la charge du cylindre (12) au dessus desquelles le pré-allumage du mélange carburé est favorisé,
- à évaluer la charge effective du cylindre,
- à hétérogénéiser, entre le régime-moteur faible (Rf) et le régime-moteur bas (Rb), le mélange carburé lorsque la valeur de la charge évaluée est proche de celle de la valeur limite établie (P2).

Figure 2

EP 2 166 216 A1

**Description**

La présente invention se rapporte à un procédé de contrôle de la combustion d'un mélange carburé pour un moteur à combustion interne à allumage commandé, notamment pour un moteur suralimenté.

Elle concerne plus particulièrement un procédé pour un moteur suralimenté à injection directe ou indirecte de carburant, notamment de type Essence.

Comme cela est mieux décrit dans la demande de brevet français N° 2 897 900 du demandeur, ce type de moteur comprend un cylindre avec une chambre de combustion dans laquelle un mélange carburé est renfermé.

Ce mélange carburé subit conventionnellement une étape de compression par le piston de ce moteur, puis une étape de combustion. Cette combustion est réalisée sous l'effet d'un allumage commandé, comme une bougie.

Comme cela est décrit dans cette demande de brevet, ce mélange carburé peut subir une combustion anormale due à un pré-allumage de celui-ci, avant que ce mélange ne soit allumé, par exemple par la bougie d'allumage.

Cette combustion anormale, qui est différente de la combustion avec cliquetis, se passe généralement avec des moteurs, principalement à forte suralimentation, qui ont subi une étape de réduction de la cylindrée, plus connue sous le vocable anglais de "downsizing". Cette étape a pour objet de diminuer la taille et la cylindrée du moteur tout en conservant la même puissance et le même couple que des moteurs conventionnels, ce qui les rend propices à l'apparition de pré-allumage.

Ainsi, compte tenu des fortes pressions et des températures élevées atteintes dans la chambre de combustion par la suralimentation, un démarrage de combustion anormale (ou pré-allumage) peut se produire, généralement sporadiquement, et parfois bien avant le moment où se réalise l'allumage du mélange carburé à la bougie. Ceci se produit notamment à fortes charges du moteur et à bas régimes de ce moteur.

Dans le cas où ce pré-allumage du mélange carburé entraîne une combustion anormale violente, aléatoire et sporadique, elle est appelée "claquement" (ou "rumble") et elle peut générer des niveaux de pressions très élevés dans la chambre de combustion (supérieures à 100 bars). Ces niveaux de pressions accompagnés d'une augmentation de transferts thermiques avec le cylindre et le piston du moteur peuvent entraîner une destruction partielle ou totale de l'équipage mobile du moteur et une mise hors service du moteur.

La présente invention se propose donc de remédier aux inconvénients ci-dessus grâce à une action préventive permettant de contrôler, limiter, voire empêcher, le pré-allumage du mélange carburé.

A cet effet, la présente invention concerne un procédé de contrôle de la combustion d'un moteur à combustion interne à allumage commandé, en particulier moteur suralimenté, dans lequel le moteur comprend au moins un cylindre avec une chambre de combustion, des moyens d'admission avec au moins une soupape d'admission et une tubulure d'admission, des moyens d'échappement avec au moins une soupape d'échappement et une tubulure d'échappement, et des moyens d'alimentation en carburant permettant de réaliser un mélange carburé dans ladite chambre de combustion, caractérisé en ce qu'il consiste :

- à établir, entre un régime-moteur faible et un régime-moteur bas du moteur , une courbe des valeurs limites de la charge du cylindre au-dessus desquelles un pré-allumage du mélange carburé est favorisé,
- à évaluer la charge effective du cylindre,
- à hétérogénéiser, entre le régime-moteur faible et le régime-moteur bas, le mélange carburé lorsque la valeur de la charge évaluée est proche de celle de la valeur limite établie.

Le procédé peut consister à établir, entre le régime-moteur faible et le régime-moteur bas, une courbe des valeurs de la charge du cylindre à partir desquelles l'hétérogénéisation du mélange carburé est débutée.

Le procédé peut consister à contrôler les paramètres d'injection de carburant des moyens d'alimentation en carburant pour réaliser l'hétérogénéisation du mélange carburé.

Le procédé peut consister, lorsque les moyens d'alimentation en carburant introduisent du carburant directement dans la chambre de combustion, à réaliser au moins deux injections successives de carburant dans ladite chambre pour hétérogénéiser le mélange carburé.

Le procédé peut consister, lorsque les moyens d'alimentation en carburant introduisent du carburant dans la chambre de combustion indirectement par deux tubulures d'admission, à réaliser des injections dissymétriques de carburant pour hétérogénéiser le mélange carburé.

Le procédé peut consister à réaliser une injection de carburant dans l'une des tubulures puis à réaliser une injection de carburant dans l'autre des tubulures.

Le procédé peut consister à réaliser une injection de carburant dans l'une des tubulures de quantité plus grande que l'injection de carburant dans l'autre tubulure.

Le procédé peut consister, lorsque les moyens d'alimentation en carburant introduisent du carburant directement et indirectement dans la chambre de combustion, à réaliser une injection de carburant par les moyens d'alimentation indirecte en carburant et à introduire le mélange carburé dans la chambre de combustion, puis à réaliser une injection de carburant dans le mélange carburé pour obtenir un mélange carburé.

Les autres caractéristiques et avantages de l'invention apparaîtront à la lecture de la description donnée ci-après en se référant aux dessins annexés où :

- la figure 1 montre un moteur utilisant le procédé de contrôle de la combustion d'un mélange carburé selon l'invention et
- la figure 2 montre des courbes de charges du moteur en fonction de la vitesse de rotation (R) de ce moteur.

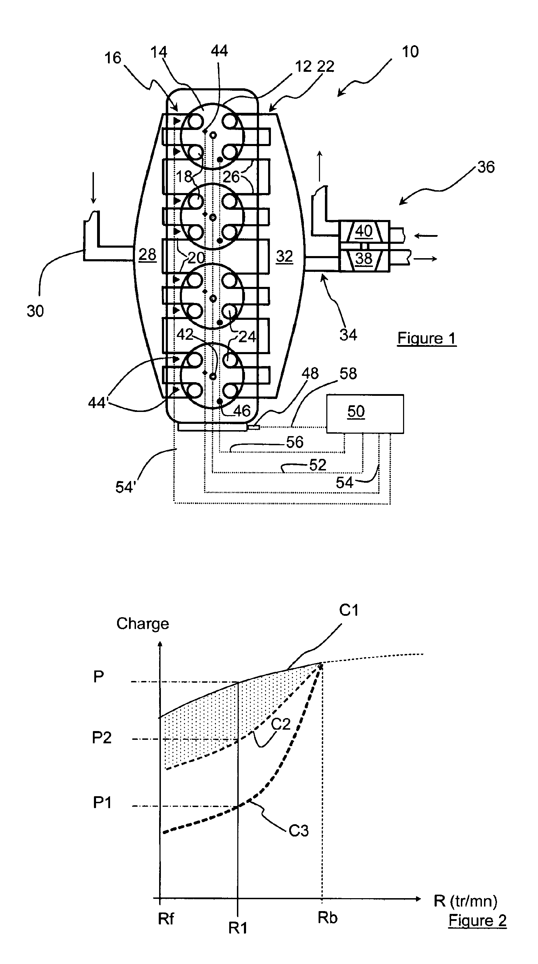

Sur la figure 1, il est illustré un moteur à combustion interne suralimenté 10 à allumage commandé, en particulier de type essence.

Ceci n'écarte en aucune manière, tout autre type de moteur à allumage commandé, tel que celui fonctionnant avec du gaz, comme du GNV (Gaz Naturel pour Véhicule) ou du GPL (Gaz de Pétrole Liquéfié), ou à partir d'autres carburants à base de biocarburant, d'éthanol, ...

Ce moteur comprend au moins un cylindre 12 avec une chambre de combustion 14 délimitée généralement par la paroi intérieure du cylindre, la partie de la culasse en regard du piston qui coulisse à l'intérieur de ce piston et le haut du piston.

C'est dans cette chambre de combustion que se produit la combustion d'un mélange d'air, de préférence suralimenté, et de carburant, ici à titre d'exemple un carburant Essence.

Le cylindre comprend des moyens d'admission d'air 16 avec au moins une soupape 18, ici deux soupapes d'admission, associée chacune à une tubulure d'admission 20. Ce cylindre comprend également des moyens d'échappement des gaz brûlés 22 avec au moins une soupape d'échappement 24 contrôlant chacune une tubulure d'échappement 26.

Les tubulures d'admission 20 sont raccordées à un collecteur d'admission 28 alimenté en air, de préférence suralimenté, par un conduit d'alimentation 30 alors que les tubulures d'échappement 26 sont connectées à un collecteur d'échappement 32 lui-même relié à une ligne d'échappement 34.

Un dispositif de suralimentation 36, par exemple un turbocompresseur, est placé sur cette ligne d'échappement. Ce turbocompresseur comprend une turbine 38 balayée par les gaz d'échappement circulant dans la ligne d'échappement et un compresseur 40 lié en rotation avec la turbine de façon à permettre la compression de l'air extérieur et de faire admettre cet air d'admission sous pression (ou air suralimenté) dans le collecteur d'admission par le conduit 30 puis dans les chambres de combustion 14 par les tubulures d'admission 20.

Ce cylindre comprend en outre des moyens d'allumage 42, par exemple une bougie d'allumage, qui permettent de générer une ou plusieurs étincelles permettant d'enflammer le mélange carburé présent dans la chambre de combustion du cylindre.

Ce cylindre comprend aussi des moyens d'alimentation en carburant 44, ici sous la forme d'un injecteur de carburant qui permet d'introduire du carburant directement dans la chambre de combustion.

Il comprend des moyens de mesure permettant d'évaluer la charge du cylindre 12.

A titre d'exemple, ces moyens comprennent un capteur de pression 46 qui est placé en regard de la chambre de combustion et qui permet de mesurer la pression régnant à l'intérieur de cette chambre pour en déduire par la suite la charge du moteur correspondant à sa pression moyenne indiquée PMI en bar

$$\left( PMI = \frac{1}{\text{Cylindrée}} \int p.dv \right).$$

Ces moyens de mesure peuvent être aussi un capteur de couple (non représenté) qui permet de déduire la charge du moteur correspondant à sa pression moyenne effective PME en bar

$$\left( PME = \frac{4\pi}{100} \frac{\text{Couple}}{\text{Cylindrée}} \right.$$

où Couple est le couple du moteur en Newton par mètre (N.m) et Cylindrée est la cylindrée du moteur en décimètre cube (dcm$^3$)).

A titre d'autres exemples, la charge du moteur peut correspondre à une Pression équivalente carburant (en bar) qui répond à la formule

$$M_{carb} * PCI * \frac{1}{\text{Cylindrée}} \quad \text{ou} \quad \frac{M_{air} * \Phi}{\Psi_S} * PCI * \frac{1}{\text{Cylindrée}}$$

pour lesquels:

$M_{carb}$ = Masse de carburant (en gramme (g))
PCI = Pouvoir calorifique inférieur (en joule par gramme (j/g))
Cylindrée = Cylindrée (en décimètre cube (dcm$^3$))
$M_{air}$ =Masse d'air (en gramme (g))
$\Phi$ = Richesse
$\Psi_S$ = Pouvoir comburivore

Bien entendu, tout autre moyen peut être utilisé, comme des sondes d'ionisation, des capteurs optiques,...

Il est également prévu un capteur de vitesse de rotation 48 du moteur (ou régime-moteur) qui est préférentiellement placé sur le vilebrequin (non représenté) de ce moteur et qui envoie un signal représentatif de cette vitesse au calculateur-moteur. Cette mesure de vitesse, associée à une mesure de couple instantanée, permet de reconstruire une image de la pression cylindre et de ce fait d'obtenir une image de la charge du moteur, ici la PME.

Ainsi, dans le cas de la présente description, la charge du cylindre correspond à la PMI, à la PME ou à la Pression équivalent carburant.

De manière connue en soi, ce moteur comprend une unité de calcul et de commande 50 (ou calculateur-moteur) qui permet conventionnellement de contrôler le fonctionnement de ce moteur.

Ce calculateur-moteur est relié directement ou indirectement par des conducteurs aux différents capteurs, sondes et/ou moyens de détection que comporte le moteur de façon à pouvoir recevoir les signaux émis par ceux-ci, (la pression dans la chambre de combustion, le régime-moteur,...). Ces signaux sont traités par calcul et le calculateur commande ensuite par des lignes de commande les organes de ce moteur pour assurer son bon fonctionnement.

Dans le cas de l'exemple illustré à la figure 1, les bougies 42 sont reliées par des lignes de commande 52 au calculateur-moteur de façon à commander la génération d'étincelles ainsi que le moment de l'allumage du mélange carburé. Les injecteurs 44 sont raccordés à ce calculateur-moteur par des lignes de commande 54 pour commander les paramètres d'injection de carburant dans les chambres de combustion, comme la quantité de carburant injecté et/ou le moment d'injection. Les capteurs de pression 46 sont reliés par un conducteur 56 à ce même calculateur pour lui envoyer les signaux représentatifs de la pression régnant dans les chambres de combustion. Le capteur de vitesse de rotation 48 est connecté à ce calculateur par un fil de transmission d'informations 58 permettant de connaître le régime-moteur.

Comme cela est largement connu, ce calculateur-moteur comporte des cartographies ou des tables de données qui permettent d'évaluer les paramètres nécessaires au fonctionnement du moteur et cela en fonction des différentes conditions de fonctionnement de ce moteur, comme le régime du moteur ou la puissance demandée par le conducteur.

Ainsi, certaines de ces cartographies répertorient, en fonction de ces différentes conditions de fonctionnement, l'évolution de grandeurs liées à au moins un paramètre représentatif de l'état du mélange carburé pendant la phase de combustion, comme la grandeur liée à la pression régnant à l'intérieur du cylindre, plus communément appelée pression cylindre.

On se reporte maintenant à la figure 2 qui montre l'évolution de la charge du moteur, représentée à titre d'exemple non limitatif par l'évolution de la PMI (Pression Moyenne Indiquée - en bar) dans les cylindres du moteur, en fonction de la vitesse de rotation du moteur R (ou régime-moteur), en nombre de tours par minute - tr/mn.

Sur cette figure, la courbe C1 représente l'évolution de la charge maximale du moteur, à partir de la vitesse de rotation faible Rf du moteur (généralement correspondant à sa vitesse de rotation au ralenti de l'ordre de 750 tr/mn) jusqu'à une vitesse de rotation basse Rb (généralement aux environs de 2000 tr/mn) du moteur au-delà de laquelle les phénomènes de pré-allumage sont quasiment inexistants.

Au cours de nombreux tests et simulations sur un moteur ayant subi une étape de réduction de la cylindrée (ou moteur "downsizé"), le demandeur a pu mettre en exergue que l'apparition de pré-allumage du mélange carburé se produit préférentiellement lorsque ce mélange carburé est un mélange homogène et lorsque le moteur fonctionne à bas régime-moteur (typiquement inférieur à 2000 tr/mn) et à fortes charges.

Il a pu en conséquence être déterminé, en fonction du régime-moteur à partir du régime-moteur faible Rf jusqu'à la valeur Rb du régime-moteur bas, une courbe représentative de l'évolution de la charge du moteur (représentée par la courbe C2) au delà de laquelle l'apparition de pré-allumage est fortement favorisée (zone grisée de la figure 2).

Conséquemment, le demandeur a décidé de paramétrer le calculateur-moteur de façon à ce que cette configuration de fonctionnement du moteur (mélange homogène + faible régime-moteur + fortes charges) ne puisse pas toujours se produire.

Plus précisément, il est prévu de dégrader la préparation du mélange carburé à partir d'une courbe représentative de charge C3 (en dessous de la courbe C2), entre les valeurs Rf et Rb, de façon à ce que ce mélange présent dans le cylindre concerné ne soit pas un mélange carburé homogène quand la charge atteinte dans le cylindre concerné est celle de la courbe limite C2.

Cette courbe C3, comme pour la courbe C2, a été établie à partir de simulations et de calculs de façon à obtenir d'une manière quasi certaine un mélange carburé hétérogène lorsque la charge du moteur atteint la valeur de la courbe C2.

Dans le cas de la figure 1 et uniquement à titre d'exemple, durant le fonctionnement du moteur, le calculateur-moteur reçoit des signaux, d'une part, du capteur de vitesse de rotation 48 du moteur lui permettant de déterminer le régime-moteur et, d'autre part, du capteur de pression 46 pour lui permettre d'évaluer la PMI régnant dans le cylindre, objet des mesures et qui est représentative de la charge du moteur.

Dans le cas où le régime-moteur est supérieur à la valeur Rb, le fonctionnement du moteur est conventionnel avec une injection de carburant visant à obtenir un mélange carburé homogène.

Si la vitesse de rotation est inférieure à Rb, comme la valeur R1 indiquée à titre d'exemple sur la figure 2, le potentiel d'obtention d'un pré-allumage du mélange carburé pour une charge supérieure à la valeur P2 de la courbe C2 est élevé.

Dans ce cas, le calculateur commande les différents actionneurs du moteur pour entamer les opérations de dégradation du mélange carburé dés que la valeur mesurée par le capteur de pression 46 permet de déterminer que la charge de ce cylindre atteint ou dépasse la valeur P1 de la courbe C3.

Plus précisément, les paramètres d'injection de carburant du cylindre considéré sont modifiés lorsque la charge du cylindre est supérieure ou égale à la valeur de P1 de la courbe C3. Ces modifications permettent d'obtenir un mélange carburé qui ne soit pas un mélange homogène lorsque la charge (déduite de la mesure de la pression du cylindre par le capteur 46) atteinte pour ce cylindre est voisine de la valeur P2 (P > P2 > P1) de la courbe C2.

Ainsi, entre les valeurs de charge comprises entre la valeur P2 de la courbe C2 et la valeur P de la courbe C1, le mélange carburé hétérogène est statistiquement dans une configuration qui permet de limiter l'apparition du pré-allumage.

Cette hétérogénéité permet ainsi de créer des niveaux de température différents dans la chambre de combustion de par la présence de zone de mélanges carburés avec des richesses différentes suite à la vaporisation du carburant.

A titre d'un premier exemple et selon le moteur avec injection directe illustré en figure 1, l'hétérogénéité du mélange carburé est créé par au moins deux injections successives de carburant réalisées lorsque la charge du cylindre considéré atteint celle de la courbe C3.

Cette succession d'injections, ici une double injection qui est contrôlée par le calculateur-moteur au travers de la ligne de commande 54, a pour effet de retarder et de dégrader le mélange du carburant de la seconde injection avec le mélange carburé déjà présent dans la chambre de combustion issu de la première injection.

Ceci permet de réaliser un mélange carburé qui ne soit pas complètement homogène lorsque la charge dans le cylindre concerné atteint la courbe C2 pour le régime-moteur considéré.

Dans le cas d'un autre exemple, il peut être prévu que le moteur à combustion interne soit un moteur à injection indirecte de carburant avec deux soupapes d'admission contrôlant chacune une tubulure d'admission.

Pour obtenir un tel moteur à injection indirecte, les moyens d'alimentation directe en carburant 44 et la ligne de commande 54 illustrés à la figure 1 sont supprimés et sont remplacés par des moyens d'alimentation indirecte en carburant 44' reliés au calculateur-moteur 50 par une ligne de commande 54'. Ces moyens d'alimentation en carburant sont conventionnellement des injecteurs de carburant placés à l'admission du moteur, au niveau des tubulures d'admission.

Ainsi, pour réaliser l'hétérogénéité du mélange carburé à partir de la courbe C3, l'injection de carburant est réalisée en dissymétrisant cette injection entre les deux tubulures d'admission, par exemple en retardant l'injection de carburant dans l'une des tubulures d'admission par rapport à l'autre des tubulures.

Il peut également être envisagé de dissymétriser les introductions de carburant en injectant une grande quantité de carburant dans l'une des tubulures et une quantité moindre de carburant (voire pas de carburant) dans l'autre tubulure.

Il peut aussi être prévu de dégrader l'avance à l'injection, par exemple en injectant le carburant avec les soupapes d'admission en position d'ouverture.

Grâce à cela, le mélange carburé obtenu dans le cylindre visé est un mélange hétérogène et l'apparition du phénomène de pré-allumage est fortement limitée lorsque la charge de ce cylindre atteint celle de la courbe C2.

Il peut également être envisagé d'utiliser un moteur à combustion interne avec des moyens d'alimentation directe en carburant 44 et des moyens d'alimentation indirecte en carburant 44', tous deux contrôlés par le calculateur-moteur 50.

Dans cette configuration de moteur, l'hétérogénéité du mélange carburé peut être réalisée par les moyens d'alimentation directe en carburant.

Pour cela, une partie du carburant est injectée à l'admission par les moyens d'alimentation indirecte 44' et le mélange carburé ainsi obtenu est admis dans la chambre de combustion. Par la suite, les moyens d'alimentation directe 44 introduisent du carburant dans la chambre de combustion où réside déjà ce mélange carburé en créant une zone de mélange carburé très riche.

Le mélange obtenu en final est un mélange carburé quasiment stratifié qui limitera la probabilité d'apparition du pré-allumage lorsque la charge atteinte sera celle de la courbe C2.

La présente invention n'est pas limitée aux exemples de réalisation décrits ci-dessus mais englobe toutes variantes et tous équivalents.

## Revendications

1. Procédé de contrôle de la combustion d'un moteur à combustion interne à allumage commandé, en particulier moteur suralimenté, dans lequel le moteur comprend au moins un cylindre (12) avec une chambre de combustion (14), des moyens d'admission (16) avec au moins une soupape d'admission (18) et une tubulure d'admission (20), des moyens d'échappement (22) avec au moins une soupape d'échappement (24) et une tubulure d'échappement (26), et des moyens d'alimentation en carburant (44) permettant de réaliser un mélange carburé dans ladite chambre de combustion, **caractérisé en ce qu'**il consiste :

   - à établir, entre un régime-moteur faible (Rf) et un régime-moteur bas (Rb) du moteur, une courbe (C2) des valeurs limites (P2) de la charge du cylindre (12) au dessus desquelles un pré-allumage du mélange carburé est favorisé,
   - à évaluer la charge effective du cylindre,
   - à hétérogénéiser, entre le régime-moteur faible (Rf) et le régime-moteur bas (Rb), le mélange carburé lorsque la valeur de la charge évaluée est proche de celle de la valeur limite établie (P2).

2. Procédé de contrôle selon la revendication 1, **caractérisé en ce qu'**il consiste à établir, entre le régime-moteur faible (Rf) et le régime-moteur bas (Rb), une courbe (C3) des valeurs de la charge du cylindre (12) à partir desquelles l'hétérogénéisation du mélange carburé est débutée.

3. Procédé de contrôle selon la revendication 1 ou 2, **caractérisé en ce qu'**il consiste à contrôler les paramètres d'injection de carburant des moyens d'alimentation en carburant (44) pour réaliser l'hétérogénéisation du mélange carburé.

4. Procédé de contrôle selon l'une des revendications précédentes dans lequel les moyens d'alimentation en carburant (44) introduisent du carburant directement dans la chambre de combustion (14), **caractérisé en ce qu'**il consiste à réaliser au moins deux injections successives de carburant dans ladite chambre pour hétérogénéiser le mélange carburé.

5. Procédé de contrôle selon l'une des revendications 1 à 3 dans lequel les moyens d'alimentation en carburant (44') introduisent du carburant dans la chambre de combustion (14) indirectement par deux tubulures d'admission (20), **caractérisé en ce qu'**il consiste à réaliser des injections dissymétriques de carburant pour hétérogénéiser le mélange carburé.

6. Procédé de contrôle selon la revendication 5, **caractérisé en ce qu'**il consiste à réaliser une injection de carburant dans l'une des tubulures puis à réaliser une injection de carburant dans l'autre des tubulures.

7. Procédé de contrôle selon la revendication 5, **caractérisé en ce qu'**il consiste à réaliser une injection de carburant dans l'une des tubulures de quantité plus grande que l'injection de carburant dans l'autre tubulure.

8. Procédé de contrôle selon l'une des revendications 1 à 3 dans lequel des moyens d'alimentation en carburant (44) introduisent du carburant directement dans la chambre de combustion (14) et des moyens d'alimentation en carburant (44') introduisent du carburant indirectement dans la chambre de combustion (14), **caractérisé en ce qu'**il consiste à réaliser une injection de carburant par les moyens d'alimentation indirecte en carburant (44') et à introduire le mélange carburé dans la chambre de combustion, puis à réaliser une injection de carburant dans le mélange carburé pour obtenir un mélange carburé.

Figure 1

Figure 2

Europäisches
Patentamt

European
Patent Office

Office européen
des brevets

## RAPPORT DE RECHERCHE EUROPEENNE

Numéro de la demande

EP 09 29 0660

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (IPC) |
| X<br>Y | EP 0 849 459 A (MITSUBISHI MOTORS CORP [JP]) 24 juin 1998 (1998-06-24)<br>* colonne 18, ligne 20-57 *<br>* colonne 22, ligne 40 - colonne 23, ligne 16 *<br>* colonne 15, ligne 3-23 *<br>----- | 1-4<br><br>5-7 | INV.<br>F02D41/30<br>F02D41/40 |
| X | JP 2007 292059 A (MAZDA MOTOR) 8 novembre 2007 (2007-11-08)<br>* abrégé; figures 20,23a *<br>----- | 1-4 | |
| X | JP 2002 339780 A (NISSAN MOTOR) 27 novembre 2002 (2002-11-27)<br>* abrégé; figures 2-4 *<br>----- | 1-3 | |
| X | EP 1 574 697 A (TOYOTA MOTOR CO LTD [JP]) 14 septembre 2005 (2005-09-14)<br>* alinéas [0044] - [0051]; figure 7 *<br>----- | 1-3,8 | |
| X | US 2006/144365 A1 (MIYASHITA SHIGEKI [JP]) 6 juillet 2006 (2006-07-06)<br>* alinéa [0050] *<br>----- | 1-4,8 | DOMAINES TECHNIQUES RECHERCHES (IPC)<br><br>F02D |
| Y | FR 2 879 666 A (INST FRANCAIS DU PETROLE [FR]) 23 juin 2006 (2006-06-23)<br>* page 4, ligne 31 - page 5, ligne 31 *<br>----- | 5-7 | |
| A | JP 2004 052624 A (TOYOTA MOTOR CORP) 19 février 2004 (2004-02-19)<br>* abrégé *<br>----- | 1 | |

Le présent rapport a été établi pour toutes les revendications

| Lieu de la recherche | Date d'achèvement de la recherche | Examinateur |
|---|---|---|
| La Haye | 3 décembre 2009 | Röttger, Klaus |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 29 0660

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-12-2009

| Document brevet cité au rapport de recherche | | Date de publication | Membre(s) de la famille de brevet(s) | | Date de publication |
|---|---|---|---|---|---|
| EP 0849459 | A | 24-06-1998 | CN | 1185519 A | 24-06-1998 |
| | | | DE | 69711572 D1 | 08-05-2002 |
| | | | DE | 69711572 T2 | 28-11-2002 |
| | | | DE | 69721087 D1 | 22-05-2003 |
| | | | DE | 69721087 T2 | 12-02-2004 |
| | | | JP | 3189734 B2 | 16-07-2001 |
| | | | JP | 10231744 A | 02-09-1998 |
| | | | US | 6062189 A | 16-05-2000 |
| JP 2007292059 | A | 08-11-2007 | AUCUN | | |
| JP 2002339780 | A | 27-11-2002 | JP | 3912032 B2 | 09-05-2007 |
| EP 1574697 | A | 14-09-2005 | CN | 1667254 A | 14-09-2005 |
| | | | JP | 2005256675 A | 22-09-2005 |
| | | | US | 2005199218 A1 | 15-09-2005 |
| US 2006144365 | A1 | 06-07-2006 | CN | 101151446 A | 26-03-2008 |
| | | | EP | 1834072 A1 | 19-09-2007 |
| | | | EP | 2110534 A1 | 21-10-2009 |
| | | | JP | 2006188973 A | 20-07-2006 |
| | | | WO | 2006073062 A1 | 13-07-2006 |
| | | | US | 2008208439 A1 | 28-08-2008 |
| FR 2879666 | A | 23-06-2006 | EP | 1831514 A1 | 12-09-2007 |
| | | | WO | 2006067338 A1 | 29-06-2006 |
| | | | JP | 2008524513 T | 10-07-2008 |
| JP 2004052624 | A | 19-02-2004 | JP | 4135419 B2 | 20-08-2008 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2897900